# EUROPÄISCHE PATENTSCHRIFT

(11) **EP 0 493 311 B1**
(45) Veröffentlichungstag und Bekanntmachung des Hinweises auf die Patenterteilung: **22.01.1997**
(21) Anmeldenummer: 91810884.6
(22) Anmeldetag: 14.11.1991
(51) Int. Cl.: F16L 55/027

(54) **Verwendung einer Hülse als Drossel zur Reduzierung der Stellgeschwindigkeit eines druckgasbetriebenen Stellantriebes**
Use of a a bushing as flow restrictor for reducing the velocity of a gas driven actuator
Utilisation d'une douille comme étranglement pour réduire la vitesse d'un vérin actionné par un gaz sous pression

(30) Priorität: 28.12.1990 DE 4042155; 26.02.1991 DE 4105998
(43) Veröffentlichungstag der Anmeldung: 01.07.1992
(73) Patentinhaber: Maschinenfabrik Wifag, CH-3001 Bern (CH)
(72) Erfinder: Gander, Adolf, CH-3014 Bern (CH)

(56) Entgegenhaltungen:
- BE-A- 542 780
- CH-A- 544 907
- DE-A- 2 036 217
- FR-A- 2 239 608
- GB-A- 1 069 139

## Beschreibung

Die Erfindung betrifft die Verwendung einer in ein Leitungsende einer Druckgasleitung eingesetzten Hülse als Drossel.

Druckgasbetriebene Anlagen werden meist aus einem unter konstantem Innendruck stehenden Behälter mit Druckgas versorgt. Um die Stellgeschwindigkeit eines Stellantriebes, beispielsweise eines Pneumatikzylinders in einer Pneumatikanlage, den jeweiligen Erfordernissen anzupassen, werden Druckregelventile, Absperrhähne oder Druckbegrenzungsventile eingesetzt.

Als typisches Einsatzgebiet solcher pneumatischer Stellantriebe seien Druckmaschinen für Offset- oder Tiefdruck mit einer Vielzahl von Walzen genannt, die durch Pneumatikzylinder senkrecht zur Walzenlängsachse bewegt werden müssen. Die Pneumatikanlage wird mit Druckluft konstanten Drucks, üblicherweise von 6 bar, zumeist von einer stationären Verdichteranlage versorgt. Sollen nun die angesprochenen Walzen sehr behutsam aufeinander zu bewegt werden, so sind entsprechend dimensionierte Pneumatikzylinder einzubauen und/oder Regelglieder wie Druckbegrenzungsventile, Absperrhähne, etc. anzupassen, was neben dem konstruktiven Aufwand auch Montagearbeiten erfordert. Zudem sind diese Regelglieder oft teuer und benötigen entsprechenden Raum für den Einbau.

Das Problem stellt sich in besonderem Maße, wenn eine bereits konstruierte Anlage nachträglich modifiziert werden soll, etwa um die Stellgeschwindigkeit der Pneumatikzylinder zu reduzieren, damit der Verschleiß der teuren Walzen verringert wird. Dabei ist der Verschleiß gemeint, der durch das Inkontaktbringen einer leerlaufenden Walze mit einer angetriebenen, rotierenden Walze hervorgerufen wird, da gerade in diesem Moment die Lager der angetriebenen Walze und besonders deren Antrieb fast schlagartig hohe Drehmomente aufnehmen müssen, die abgemildert werden sollen. In solchen Fällen ist es oft nicht mehr oder nur mit unvertretbar hohem Aufwand möglich, zusätzliche Regelglieder einzubauen, die das Problem lösen würden, wobei der Aufwand noch durch die üblicherweise große Zahl der eingebauten Pneumatikzylinder, nicht selten sind es bis zu 60 Zylinder, in die Höhe getrieben wird.

Bekannt sind zur Lösung ähnlich gelagerter Probleme, nämlich mit einfachen Mitteln eine bestimmte Geschwindigkeitsverminderung zu erzeugen, sogenannte pneumatische Widerstände oder allgemeiner Fluidik-Widerstände für Druckluftsysteme bis maximal etwa 2 bar, die, einem Hohlzylinder mit eingebauter Blende ähnlich, in eine vorhandene Druckluftleitung eingesetzt werden. Dazu weisen die hohlzylindrischen Grundkörper zwei Endbereiche mit jeweils einem Innengewinde auf, die auf entsprechend vorzubereitende Leitungsenden aufgeschraubt werden können. Diese vergleichsweise einfach aufgebauten pneumatischen Widerstände machen es jedoch erforderlich, daß das anzuschließende Leitungsende mit einem Außengewinde versehen sein muß, um in solch einen Widerstand eingeschraubt werden zu können, was neben der zusätzlichen Arbeit starre Pneumatikleitungen oder einen Adapter voraussetzen würde.

Zum Verbinden flexibler Pneumatikleitungen bei gleichzeitig geschwindigkeitsmindernder Funktion sind ferner sogenannte Fluistoren bekannt, die im wesentlichen einen zylindrischen Grundkörper mit einer Durchlaßbohrung aufweisen, der auf seiner Außenseite, etwa in der Zylindermitte, einen ringförmig hervorstehenden Steg als Anschlag für die zu seinen beiden Seiten aufzuschiebenden Leitungsenden besitzt. An einer Seite der Durchlaßbohrung ist zur Erzeugung der Geschwindigkeitsminderung eine blendenartige Konstruktion angeordnet. Der zylindrische Grundkörper ist an seinen beiden Stirnflächen zur leichteren Einführbarkeit in einen Pneumatikschlauch umlaufend gefast. Wie schon das letztgenannte Beispiel, wird auch dieser Fluidik-Widerstand herstellerseitig nur für Druckluftsysteme bis maximal 2 bar Betriebsdruck angeboten, was hier durch die einfache Verbindungstechnik vorgegeben sein dürfte.

Darüber hinaus existieren weitere pneumatische Widerstände, die eine vergleichbare Bauform aufweisen, nämlich einen im wesentlichen hohlzylindrisch ausgebildeten Grundkörper mit zwei freien Enden, die für das Verbinden zweier Pneumatikleitungen bezw. zweier Pneumatik-Bauelemente ausgelegt sind und mit einer Durchlassbohrung, innerhalb derer oder an deren Seiten eine druckminderende Blende angeordnet ist. Sollten diese Widerstände innerhalb von Leitungssystemen eingesetzt werden, die unter 6 bar Betriebsdruck stehen, so ist in jedem Fall eine spezeille Vorbereitung der zu verbindenden Leitungsenden notwendig, zumeist durch Aufbringen eines entsprechenden Innenbezw. Aussengewindes, um die sichere Verbindung zu gewährleisten.

Eine Verbindung zwischen einer Druckgasleitung und einer auf das Ende der Druckgasleitung steckbaren Leitungskupplung wird durch eine Firmenschrift der Wabco Fahrzeugbremsen GmbH mit dem Titel "Beschreibung der Druckluftgeräte in Fahrzeugen", Seiten 131 - 133, Ausgabe Juni 1980, offenbart. Diese Leitungskupplung wird durch eine Stoßverschraubung hergestellt, deren Vormontage mit gehärteten Vormontagestutzen im Schraubstock erfolgen muß. Das in die Verschraubung einzubringende Rohrende muß vorbereitet sein. Dazu sitzt auf dem Rohrende ein Schneidring, der an dem Rohr beim Verschrauben eine konzentrische Verformung verursacht. Ferner ist in der Verschraubung eine mit einem konischen Schaft versehene Einsatzdüse zur Anpassung der Be- und Entlüftungszeit der Druckluftgeräte eingesetzt. Wesentlich an dieser Verschraubung ist, daß die Düse wohl nachträglich eingesetzt werden kann, daß aber das Rohrende um den Betrag des Düsenbundes gekürzt werden muß. Der nachträgliche Einbau läßt sich ohne Werkzeuge nicht durchführen, so daß er nur an leicht zugänglichen Stellen, an denen genügend Bewegungsfreiheit für den Werkzeugeinsatz gegeben ist, möglich ist.

Aus der DE-OS 2 036 217 ist eine Stützhülse bekannt, die im Bereich eines Rohrendes einer Rohrleitung, insbesondere für die stationäre Wasserversorgung in Gärten und dergleichen, eingesetzt wird. Dabei übergreift die Stützhülse mit ihrem stirnseitigen Flansch das Rohrende. Bei solch einer Stützhülse ist eine Drosselung der Flüssigkeitsströmung durch das betreffende Rohr unerwünscht.

Der Erfindung liegt die Aufgabe zu grunde, die Stellgeschwindigkeit eines druckgasbetriebenen Stellantriebes unter Verwendung einer Hülse zu reduzieren, so dass die angegebenen Nachteile des Standes der Technik vermieden werden; insbesondere soll eine Drossel für Druckgasleitungssysteme eingesetzt werden, die zum einen einfach einsetzbar und preiswert ist, und gegebenenfall auch nachträglich noch in eine vorhandene Anlage, ohne weitere Montagearbeiten ausführen zu müssen, eingebaut werden kann und die zum andrern auch bei Betriebsdrücken bis mindestens 10 bar verwendbar ist.

Diese Aufgabe wird durch den Gegenstand des Anspruchs 1 gelöst.

Zweckmässige Ausführungsformen der erfindungsgemässen Drossel werden durch die Merkmale der Unteransprüche definiert.

Die mit der Erfindung erzielten Vorteile beruhen darauf, dass diese Drossel, ohne vorbereitende Einbaumassnahmen zu erfordern, einfach in ein Leitungsende entsprechenden Querschnittes eingesetzt und mittels einer Schnellkupplung an ein anderes Bauelement einer Druckgasanlage angeschlossen werden kann. Dadurch eignet sie sich insbesondere auch für einen nachträglichen Einbau. Durch die Art des Einsatzes, nämlich mit einem Schnellkupplungssystem als Verbindungselement, und die darauf beruhende Drosselbauform stellt sie selbst keine Verbindung im Druckgasleitungssystem dar, was bei den erwähnten Widerständen bezw. Fluistoren die Beschränkung auf den Fluidik-Bereich, d.h., bis max. etwa 2 bar Betriebsdruck, bewirkt.

Obgleich grundsätzlich für jede Art von Druckgasleitungssystemen geeignet, wird die Drossel hauptsächlich im Bereich der Pneumatikanlagen eingesetzt, so daß im folgenden auch immer stellvertretend nur von Pneumatikleitungssystemen die Rede sein soll.

Gemäß der Erfindung wird die hohlzylindrisch ausgebildete Drossel in das Ende einer Pneumatikleitung unter Aufwendung leichter Preßkraft eingesetzt und liegt dann mit ihrem zu einem Flansch verbreiterten Ende auf der Stirnseite der Leitung auf. Solch eine Drossel kann, hergestellt aus einem elastisch verformbaren Material, in starre Leitungen eingesetzt werden, oder aber, und dies entspricht einer bevorzugten Ausführungsform der Erfindung, ihrerseits aus einem harten Material bestehend, in eine flexible Pneumatikleitung eingeführt werden.

Zur Verbesserung des Sitzes der Drossel in der Leitung und damit der Dichtigkeit an dieser Stelle eignen sich ringförmige Verdickungen am einsetzbaren Teil der Drossel, die gewölbt oder konisch geformt sein können. In der bevorzugten und einfachsten Ausführungsform ist die Drossel in diesem Teil jedoch einfach kreiszylindrisch ausgebildet und wird unter geringer Kraftaufwendung in die Leitung eingesetzt.

Zweckmäßigerweise weist sie an der in die Leitung einzusetzenden Stirnseite eine umlaufend gefaste Kante auf, die der Zentrierung der Drossel beim Einführen dient.

Was die Formgebung des Gasdurchlasses der Drossel angeht, so wäre eine weite Durchlaßbohrung mit einer in der Mitte oder zu einer Seite angeordneten Blende denkbar, oder aber eine konisch sich verjüngende, eventuell wieder erweiternde Düsenführung möglich. Vorzugsweise jedoch weist die Düse eine einfache kreiszylindrische, konzentrisch angeordnete Durchlaßbohrung auf, nicht zuletzt um die Herstellungskosten niedrig halten zu können. Das Ziel, lediglich eine reduzierung der Gasdurchflußrate zu erzielen, wird durch diese einfache Bohrung mit entsprechend kleiner Querschnittsfläche ebenso erreicht. Dabei kann der Schlauch einen Innendurchmesser im Bereich von etwa 3 mm bis etwa 10 mm haben, während der Innendurchmesser der Drossel im Bereich von etwa 0,5 mm bis etwa 1,5 mm liegt. Auch die jeweiligen Extremwerte der Innendurchmesser von Schlauch bzw. Drossel können miteinander kombiniert werden, um entsprechende Gasdurchflußraten einstellen zu können.

In Vorversuchen wurde mit einer Drossel gemäß der Erfindung, deren Durchlaßbohrung eine Querschnittsfläche von etwa einem Sechszehntel der Leitungsquerschnittsfläche aufwies, eine Reduzierung der Stellgeschwindigkeit eines Pneumatikzylinders zum bereits beschriebenen Seitwärtsbewegen von Druckmaschinenwalzen von etwa 40 % erzielt, was für diesen speziellen Einsatzzweck genügt.

Da die Drossel in erster Linie für den Einsatz in ein Leitungsende gedacht ist, daß mittels einer Schnellkupplung an ein Leitungssystem anschließbar ist, kann die Länge des einsetzbaren Teils, im folgenden einsetzbare Hülse oder einfach Hülse genannt, in weiten Grenzen frei gewählt werden. Vorzugsweise jedoch ist sie mindestens so lang, daß sie nach dem Einsetzen von selbst, reibschlüssig in der Leitung gehalten wird, um einerseits die Handhabung zu erleichtern, andererseits aber, um schon eine gewisse dichtende Wirkung zu erzielen.

Eine solche Drossel kann in Druckgasanlagen bis zu einem maximalen Betriebsdruck von etwa 10 bar eingesetzt werden.

Die Erfindung wird nachstehend anhand einer bevorzugten Ausführungsform unter Bezugnahme auf die Zeichnungen im einzelnen näher erläutert. Dabei werden weitere Vorteile und Merkmale der vorliegenden Erfindung offenbart.

Es zeigt:
- Fig. 1: einen Längsschnitt einer erfindungsgemäßen Drossel;
- Fig. 2: eine Druckgasleitung mit der in Fig. 1 dargestellten Drossel im eingebauten Zustand; und
- Fig. 3: eine Schnittdarstellung einer Schnellkupplung, die eine Druckgasleitung mit der in Fig. 1 dargestellten Drossel hält.

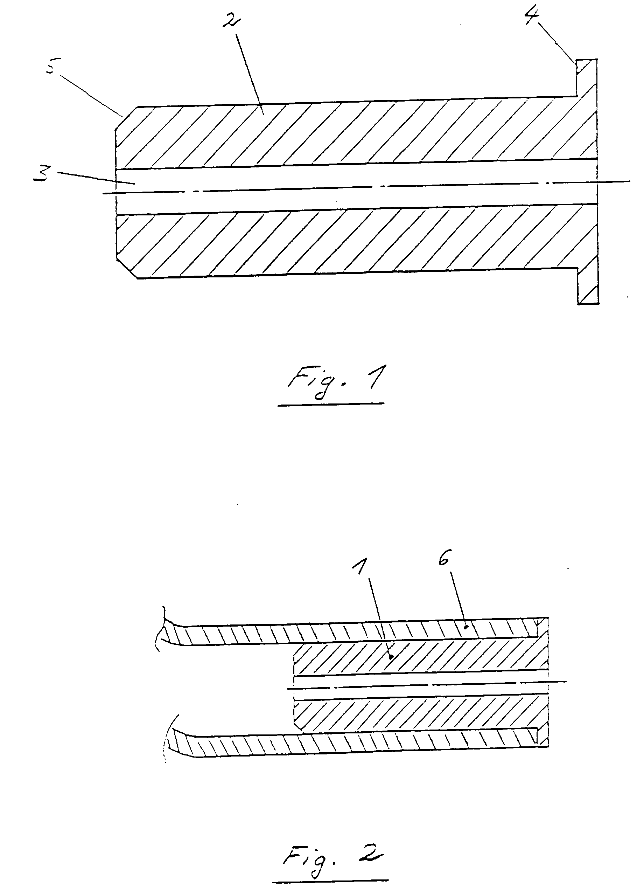

Die in Fig. 1 dargestellte, einfachste Ausführungsform einer erfindungsgemäßen Drossel 1 wird durch eine kreiszylindrische Hülse 2 mit einer konzentrisch angeordneten, ebenfalls einfach kreiszylindrisch geformten Durchlaßbohrung 3 und einem Flansch 4 an einer Stirnseite gebildet. Die andere Stirnseite weist eine umlaufend gefaste äußere Kante 5 auf, die die Drossel 1 beim Einsetzen in eine Druckgas- bzw. Pneumatikleitung 6 zentriert.

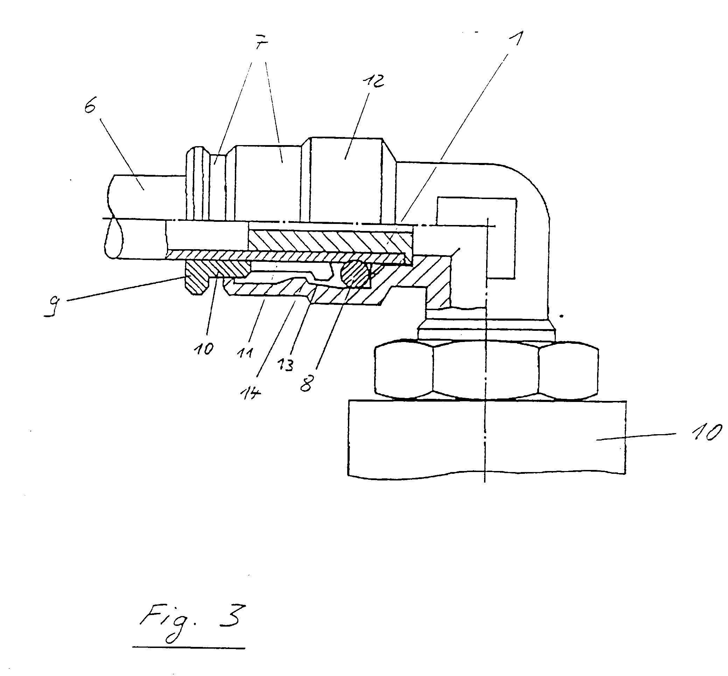

Die Hülse 2 besitzt einen Durchmesser, der etwa so groß wie der innere Durchmesser der Pneumatikleitung 6 ist, so daß sie unter Aufwendung einer leichten Preßkraft in die Pneumatikleitung 6 eingesetzt werden kann. Sie liegt dichtend und reibschlüssig gehalten an der Pneumatikleitung 6 an. Im eingesetzten Zustand, (s. Fig. 2) schließt der Flansch 4 der Drossel 1 in etwa bündig mit dem Ende der Pneumatikleitung 6 ab.

Beim dargestellten Ausführungsbeispiel weist die Durchlaßbohrung 3 einen Durchmesser auf, der etwa einem Viertel des Leitungsdurchmessers entspricht, den Leitungsquerschnitt also auf etwa ein Sechzehntel des freien Leitungsquerschnittes verengt.

Eine solche Drossel 1 ist für die Verbindung der Pneumatikleitung 6 mit den heute üblichen Schnellkupplungen 7 geeignet, wie in Fig. 3 dargestellt.

Dabei ist die Drossel 1 entsprechend Fig. 2 in die Pneumatikleitung 6 eingesetzt, so daß sie mit ihrem Flansch 4 an der Stirnseite der Pneumatikleitung 6 anliegt. Die Pneumatikleitung 6 mit Drossel 1 wird anschließend ohne weitere Montagearbeiten in die Schnellkupplung 7 eingeführt und dort wie eine normale Pneumatik leitung, d. h. wie eine Leitung ohne Drossel 1 gehalten.

Die Schnellkupplung 7 besteht im wesentlichen aus einem hohlzylindrischen Kupplungsgehäuse 12 mit einem Dichtungsring 8 und einer ebenfalls hohlzylindrischen Kupplungsklaue 9, die im Kupplungsgehäuse 12 in Längsrichtung verschiebbar und um ihre Längsachse drehbar gelagert ist. Die Kupplungsklaue 9 weist an ihrem im Kupplungsgehäuse 12 liegenden Endbereich gleichmäßig über den Umfang verteilt elastisch verformbare Zungen 11 auf, die die eingeführte Pneumatikleitung 6 fest umschließen, Wird die Pneumatikleitung 6 nun auf Zug beansprucht, so gleitet sie zusammen mit der Kupplungsklaue 9 ein kleines Stück im Kupplungsgehäuse 12 nach außen. Bei dieser Auswärtsbewegung werden die Zungen 11 über einen sich nach außen konisch verjüngenden Bereich 13 des Kupplungsgehäuses 12 bis zu einem Anschlag 14 geschoben und werden dadurch immer fester an die Pneumatikleitung 6 gepreßt, wodurch der sichere Sitz der Leitung 6 in der Schnellkupplung 7 gewährleistet ist. Die Schnellkupplung 7 ihrerseits kann in diesem Fall an ein Pneumatikbauteil 10, beispielsweise ein Ventil oder einen Pneumatikzylinder, angeschlossen sein.

Der Innendurchmesser der Pneumatikleitung 6, in der Regel eines Schlauches, kann im Bereich von 3 mm bis 10 mm liegen, während der Innendurchmesser der Durchlaßbohrung 3 der Drossel 1 im Bereich zwischen 0.5 mm und 1,5 mm liegen kann. Auch die Extremwerte dieser Durchmesserbereiche können miteinander kombiniert werden, um bestimmte Durchflußraten zu erzielen.

Solche Drosseln 1 können in Druckgasanlagen, insbesondere Druckluftanlagen mit einem Betriebsdruck bis zu etwa maximal 10 bar eingesetzt werden.

## Patentansprüche

1. Verwendung einer Hülse mit einer kreiszylindrischen Durchlassbohrung (3) und einem Flansch (4) an einer Seite, der an einem einen Anschlag bildenden Ende einer Leitung (6) anliegt, wobei die Hülse in das Ende der Leitung (6) eingesetzt ist und in der Leitung reibschlüssig gehalten wird, zum Drosseln eines Druckgases in einem Leitungssystem,
**dadurch gekennzeichnet, dass**
die Hülse (2) als Drossel zur Reduzierung der Stellgeschwindigkeit eines druckgasbetriebenen Stellantriebes in einem Leitungssystem zur Versorgung des Stellantriebes mit Druckgas verwendet wird.

2. Verwendung einer Hülse nach Anspruch 1, dadurch gekennzeichnet, dass die in die Druckgasleitung (6) einsetzbare Hülse (2) eine kreiszylindrische Form aufweist.

3. Verwendung einer Hülse nach Anspruch 1 oder 2, dadurch gekennzeichnet, dass die Durchlassbohrung (3) in der Hülse (2) konzentrisch angeordnet ist.

4. Verwendung einer Hülse nach einem der Ansprüche 1 bis 3, dadurch gekennzeichnet, dass der äussere Durchmesser der Hülse (2) etwa so gross ist wie der innere Leitungsdurchmesser der Druckgasleitung (6).

5. Verwendung einer Hülse nach einem der Ansprüche 1 bis 4, dadurch gekennzeichnet, dass der Innendurchmesser der Druckgasleitung (6) etwa im Bereich von 3mm bis 10mm und der Innendurchmesser der Durchlassbohrung (3) der Hülse (2) etwa im Bereich von 0,5 mm bis 1,5 mm liegt.

6. Verwendung einer Hülse nach einem der Ansprüche 1 bis 5, dadurch gekennzeichnet, dass der Flansch (4) im eingebauten Zustand radial bündig mit der Druckgasleitung (10) abschliesst.

7. Verwendung einer Hülse nach einem der Ansprüche 1 bis 6, dadurch gekennzeichnet, dass sie an dem von dem Flansch (4) abgewandten Ende eine umlaufend gefasste Kante (5) aufweist.

8. Verwendung einer Hülse nach einem der Ansprüche 1 bis 7, dadurch gekennzeichnet, dass sie zum Einsatz in elastisch verformbaren Druckgasleitungen aus einem harten Kunststoffmaterial oder aus einem metallischen Werkstoff wie vernickeltem Messing besteht.

9. Verwendung einer Hülse nach einem der Ansprüche 1 bis 8, dadurch gekennzeichnet, dass sie in das Ende der Druckgasleitung (6) eingesetzt ist, die mittels einer Schnellschlusskupplung (7) an weitere Bauelemente (10) eines Druckgasleitungssystems angeschlossen ist.

10. Verwendung einer Hülse nach einem der Ansprüche 1 bis 9, dadurch gekennzeichnet, dass sie bei Betriebsdrücken bis mindestens 10 bar einsetzbar ist.

11. Drosselung eines pneumatischen Stellantriebes zur Verstellung einer Walze einer Offset- oder Tiefdruck-Druckmaschine, gekennzeichnet durch eine verwendung gemäss einem der Ansprüche 1 bis 10.

## Claims

1. Use of a sleeve with a circular cylindrical through bore (3) and a flange (4) on one side which rests against an end of a line (6) forming a stop, the sleeve being inserted into the end of the line (6) and being held in the line with non-positive locking, in order to throttle a compressed gas in a line system,
**characterized in that**
the sleeve (2) is used as a throttle in order to reduce the actuating speed of a compressed-gas operated actuating drive in a line system for supplying the actuating drive with compressed gas.

2. Use of a sleeve according to Claim 1, **characterized in that** the sleeve (2) insertible into the compressed-gas line (6) has a circular cylindrical shape.

3. Use of a sleeve according to Claim 1 or 2, **characterized in that** the through bore (3) is arranged concentrically in the sleeve (2).

4. Use of a sleeve according to one of Claims 1 to 3, **characterized in that** the external diameter of the sleeve (2) is approximately as large as the internal diameter of the compressed-gas line (6).

5. Use of a sleeve according to one of Claims 1 to 4, **characterized in that** the internal diameter of the compressed-gas line (6) is approximately in the range of from 3 mm to 10 mm, and the internal diameter of the through bore (3) of the sleeve (2) is approximately in the range of from 0·5 mm to 1·5 mm.

6. Use of a sleeve according to one of Claims 1 to 5, **characterized in that** the flange (4) terminates radially in alignment with the compressed-gas line (6) in the fitted state.

7. Use of a sleeve according to one of Claims 1 to 6, **characterized in that** at its end remote from the flange (4) it has a continuously gripped* edge (5).

8. Use of a sleeve according to one of Claims 1 to 7, characterized in that for use in resiliently deformable compressed-gas lines it consists of a hard plastics material or of a metallic material such as nickel-plated brass.

9. Use of a sleeve according to one of Claims 1 to 8, **characterized in that** it is inserted into the end of the compressed-gas line (6) which is attached to further components (10) of a compressed-gas-line system by means of a rapid-action coupling (7).

10. Use of a sleeve according to one of Claims 1 to 9, **characterized in that** it can be used at operating pressures of at least 10 bar.

11. Throttling of a pneumatic actuating drive for adjusting a roller of an offset or gravure printing press, **characterized by** the use according to one of Claims 1 to 10.

## Revendications

1. Utilisation d'une douille dotée d'un perçage de passage (3) cylindrique à section circulaire et d'une bride (4) sur une face appuyant sur une extrémité, constituant une butée, d'une conduite (6), la douille étant insérée dans l'extrémité de la conduite (6) et maintenue avec une liaison par friction dans la conduite, afin d'assurer un étranglement d'un gaz sous pression dans un système de conduite, caractérisée en ce que
la douille (2) est utilisée comme étranglement afin de réduire la vitesse de réglage d'un entraînement de réglage mû par un gaz sous pression, dans un système de conduite destiné à l'alimentation en gaz sous pression de l'entraînement de réglage.

2. Utilisation d'une douille selon la revendication 1, caractérisée en ce que la douille (2), insérable dans la conduite de gaz sous pression (6), a une forme cylindrique à section circulaire.

3. Utilisation d'une douille selon la revendication 1 ou 2, caractérisée en ce que le perçage de passage (3) ménagé dans la douille (2) est disposé concentriquement.

4. Utilisation d'une douille selon l'une des revendications 1 à 3, caractérisée en ce que le diamètre extérieur de la douille (2) est environ égal au diamètre intérieur de la conduite de gaz sous pression (6).

5. Utilisation d'une douille selon l'une des revendications 1 à 4, caractérisée en ce que le diamètre intérieur de la conduite de gaz sous pression (6) est situé environ dans la plage allant de 3 mm à 10 mm, et le diamètre intérieur du perçage de passage (3) de la douille (2) est situé environ dans la plage allant de 0,5 mm à 1,5 mm.

6. Utilisation d'une douille selon l'une des revendications 1 à 5, caractérisée en ce que la bride (4) à l'état monté s'achève radialement affleurée vis-à-vis de la conduite de gaz sous pression (10).

7. Utilisation d'une douille selon l'une des revendications 1 à 6, caractérisée en ce qu'elle présente une arête (5) chanfreinée sur son pourtour, sur l'extrémité opposée à la bride (4).

8. Utilisation d'une douille selon l'une des revendications 1 à 7, caractérisée en ce qu'elle est constituée, en vue d'être mise en oeuvre dans des conduites de gaz sous pression déformables élastiquement, d'un matériau synthétique dur ou d'un matériau métallique tel que du laiton nickelé.

9. Utilisation d'une douille selon l'une des revendications 1 à 8, caractérisée en ce qu'elle est insérée dans l'extrémité de la conduite de gaz sous pression (6), qui est raccordée, au moyen d'un raccord à fermeture rapide (7), à d'autres constituants (10) d'un système de conduite de gaz sous pression.

10. Utilisation d'une douille selon l'une des revendications 1 à 9, caractérisée en ce qu'elle est utilisable pour des pressions de service allant jusqu'à au moins 10 bars.

11. Etranglement d'un entraînement de réglage pneumatique, destiné à produire un déplacement réglé,d'un rouleau d'une machine à imprimer offset ou en héliogravure, par une utilisation selon l'une des revendications 1 à 10.
